# EUROPEAN PATENT APPLICATION

(11) **EP 4 848 070 A1**
(43) Date of publication of application: **02.12.2026**
(21) Application number: 24919939.9
(22) Date of filing: 12.12.2024
(51) Int. Cl.: G06F 8/34

(54) **METHOD AND APPARATUS FOR CREATING APPLICATION, DEVICE, AND STORAGE MEDIUM**

(30) Priority: 26.01.2024 CN 202410117603
(71) Applicant: Beijing Zitiao Network Technology Co., Ltd., Beijing 100190 (CN)
(72) Inventor: PAN, Yuyang, Beijing 100028 (CN)
(74) Representative: Marks & Clerk LLP
(86) International application number: PCT/CN2024/138762
(87) International publication number: WO 2025/156861

(57) **Abstract**

Embodiments of the disclosure relate to a method, apparatus, device, and storage media for application creation. The method proposed herein comprises: based on a selection of a first application, adding the first application as a target processing entity for application creation; determining configuration information indicating a plurality of processing entities for application creation and jump information associated with the plurality of processing entities , the jump information indicating at least that a first processing entity of the plurality of processing entities is capable of switching to a second processing entity to process a request, the plurality of processing entities comprising the target processing entity; and creating a target application based on the configuration information. In this way, embodiments of the present disclosure can support a user in creating applications based on a plurality of processing entities (e.g., a bot based on multiple processing entities) by referencing an existing application (such as a released bot) and can process a task by switching processing entities.

## Description

The present application claims priority to Chinese Patent Application No. 202410117603.3, filed on Jan 26, 2024, and entitled "METHOD, APPARATUS, DEVICE AND STORAGE MEDIUM FOR APPLICATION CREATION", which is incorporated herein by reference in its entirety.

### FIELD

The example embodiments of the present disclosure relate generally to the field of computers, and, more particularly, to a method, apparatus, device, and computer readable storage medium for application creation.

### BACKGROUND

With the development of computer technology, people can create and release various types of applications through some platforms. For example, with the development of Machine Learning technology, people can quickly create applications by configuring application parameters, such as models used by the applications, available plug-ins, etc.

### SUMMARY

In a first aspect of the present disclosure, there is provided a method for application creation. The method comprises: based on a selection of a first application, adding the first application as a target processing entity for application creation; determining configuration information indicating a plurality of processing entities for application creation and jump information associated with the plurality of processing entities , the jump information indicating at least that a first processing entity of the plurality of processing entities is capable of switching to a second processing entity to process a request, the plurality of processing entities comprising the target processing entity; and creating a target application based on the configuration information.

In a second aspect of the present disclosure, there is provided an apparatus for application creation. The apparatus comprises: an adding module configured for adding, based on a selection of a first application, the first application as a target processing entity for application creation; a determination module configured for determining configuration information indicating a plurality of processing entities and jump information associated with the plurality of processing entities for application creation, the jump information indicating at least that a first processing entity of the plurality of processing entities is capable of switching to a second processing entity to process a request, the plurality of processing entities comprising the target processing entity; and a creating module configured for creating a target application based on the configuration information.

In a third aspect of the present disclosure, there is provided an electronic device. The device comprises: at least one processing unit; and at least one memory, the at least one memory being coupled to the at least one processing unit and storing instructions for execution by the at least one processing unit. The instructions, when executed by at least one processing unit, cause the device to perform the method of the first aspect.

In a fourth aspect of the present disclosure, there is provided a computer-readable storage medium. The computer-readable storage medium stores a computer program, which being executable by a processor to implement the method of the first aspect.

It would be appreciated that the content described in the section is neither intended to identify the key features or essential features of the present disclosure, nor is it intended to limit the scope of the present disclosure. Other features of the present disclosure will be readily understood through the following description.

### BRIEF DESCRIPTION OF THE DRAWINGS

The above and other features, advantages, and aspects of the various embodiments of the present disclosure will become more apparent in combination with the accompanying drawings and with reference to the following detailed description. In the drawings, the same or similar reference symbols refer to the same or similar elements, wherein:
FIG. 1 illustrates a schematic diagram of an example environment in which embodiments of the present disclosure may be implemented;
FIG. 2 illustrates a flowchart of an example process for application creation according to some embodiments of the present disclosure;
FIGS. 3A to 3E illustrate an example interface according to some embodiments of the present disclosure;
FIG. 4 illustrates a schematic structural block diagram of an example apparatus for application creation according to some embodiments of the present disclosure; and
FIG. 5 illustrates a block diagram of an electronic device capable of implementing a plurality of embodiments of the present disclosure.

### DETAILED DESCRIPTION

The embodiments of the present disclosure will be described in more detail below with reference to the accompanying drawings. Although certain embodiments of the present disclosure are illustrated in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the accompanying drawings and embodiments of the present disclosure are only for the purpose of illustration and are not intended to limit the scope of protection of the present disclosure.

It should be noted that the titles of any section/sub-section provided herein are not limiting. Various embodiments are described herein, and any type of embodiment can be comprised under any section/sub-section. In addition, the embodiments described in any section/sub-section can be combined in any way with any other embodiments described in the same section/sub-section and/or different sections/sub-sections.

In the description of the embodiments of the present disclosure, the term "comprising", and similar terms would be appreciated as open inclusion, that is, "comprising but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be comprised below. The terms "first", "second", etc. may refer to different or the same objects. The following text may also comprise other explicit and implicit definitions.

The embodiments of the present disclosure may relate to user data, obtaining and/or using data, etc. These aspects comply with respective laws and regulations. In embodiments of the present disclosure, all data collection, obtaining, processing, machining, forwarding, use, etc. are conducted on the premise that it is known and confirmed by the user. Accordingly, when implementing each embodiment of the present disclosure, the user should be informed of the types, usage scope, usage scenarios, etc. of the data or information that may be related, and authorization should be obtained from the user in accordance with the relevant laws and regulations and through an appropriate manner. The specific notification and/or authorization manner may vary according to the actual situation and application scenarios, and the scope of the present disclosure is not limited in this regard.

This specification and the solution in the embodiments, if the processing of personal information is related, the processing will be conducted on the premise that there is a basis of legality (e.g., consent of the subject of the personal information or it is necessary to fulfill a contract, etc.), and the processing will be conducted only within the scope of the stipulations or agreements. The refusal of the user to process personal information other than that which is necessary for the basic functions will not affect the use of the basic functions by the user.

Traditionally, Users support configuring the models, plug-ins, etc. used by applications to quickly create applications, e.g., a robot program (bot). However, such an application usually corresponds to a single agent, which usually has strong processing capabilities in a particular domain, which results in applications that are limited in the requests they can process, and struggle to efficiently process more complex requests.

Embodiments of the present disclosure propose a solution for application creation. According to the solution, based on a selection of a first application, the first application can be added as a target processing entity for application creation. Furthermore, configuration information can be determined. The configuration information indicates a plurality of processing entities for application creation and jump information associated with the plurality of processing entities , the jump information indicating at least that a first processing entity of the plurality of processing entities is capable of switching to a second processing entity to process a request, the plurality of processing entities comprising the target processing entity. Accordingly, a target application can be created based on the configuration information.

In this way, embodiments of the present disclosure can support users in creating applications based on a plurality of processing entities (e.g., a bot based on multiple processing entities) by referencing existing applications (e.g., released bots), and can handle tasks by switching processing entities, thereby supporting the processing of complex requests. In addition, embodiments of the present disclosure can also improve the efficiency of application creation.

Various example implementations of the embodiments are further described in detail below in conjunction with the accompanying drawings.

### Example Environment

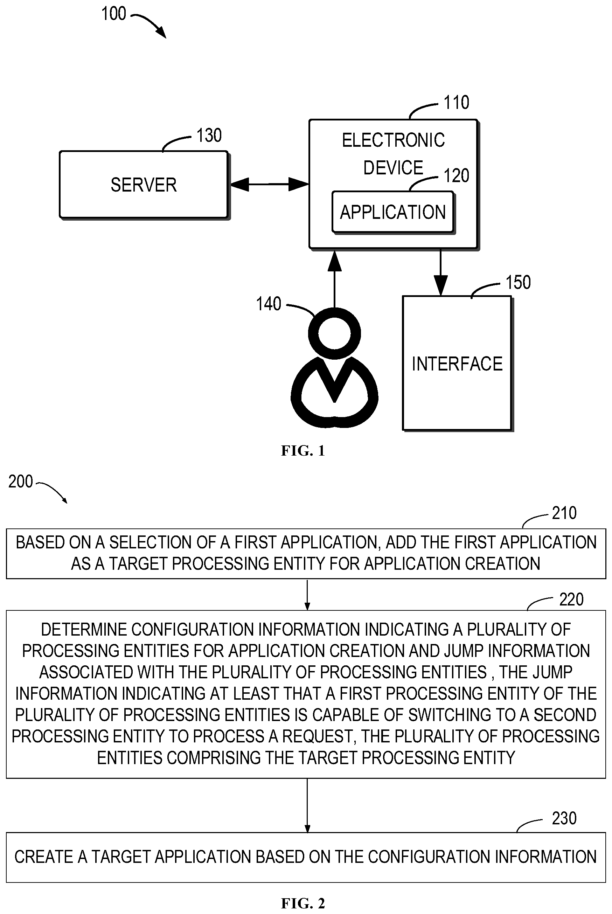

FIG. 1 illustrates a schematic diagram of an example environment 100 in which embodiments of the present disclosure can be implemented. As illustrated in FIG. 1, the example environment 100 may comprise an electronic device 110.

In this example environment 100, the electronic device 110 may execute an application 120 that supports interface interaction. The application 120 may be any suitable type of application for interface interaction, examples of which may comprise but are not limited to: developing applications or other suitable applications that support application development. A user 140 may interact with the application 120 via the electronic device 110 and/or its attached devices.

In the environment 100 of FIG. 1, if the application 120 is active, the electronic device 110 can present an interface 150 for supporting application creation through the application 120.

In some embodiments, the electronic device 110 communicates with the server 130 to implement the provisioning of services for the application 120. The electronic device 110 can be any type of mobile terminal, fixed terminal, or portable terminal, comprising mobile phones, desktop computers, laptop computers, notebook computers, netbook computers, tablet computers, media computers, multimedia tablets, handheld computers, portable gaming terminals, VR/AR devices, personal communication system (PCS) devices, personal navigation devices, personal digital assistants (PDAs), audio/Mobile Pentium 4, digital cameras/camcorders, positioning devices, television receivers, radio broadcast receivers, electronic book devices, gaming devices, or any combination thereof, comprising accessories and peripherals of these devices or any combination thereof. In some embodiments, the electronic device 110 can also support any type of user-specific interface (such as "wearable" circuits, etc.).

The server 130 can be an independent physical server, a server cluster or a distributed system composed of a plurality of physical servers, or a cloud that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 can comprise, e.g., computing systems/servers, such as mainframes, EdgeComputing nodes, computing devices in cloud environments, and so on. The server 130 can provide backend services for the application 120 that support virtual scenarios in the electronic device 110.

A communication connection can be established between the server 130 and the electronic device 110. The communication connection can be established by a wired means or a wireless means. The communication connection can comprise but is not limited to, a Bluetooth connection, a mobile network connection, a Universal Serial Bus (USB) connection, a Wireless Fidelity (WiFi) connection, etc., and embodiments of the present disclosure are not limited in this regard. In embodiments of the present disclosure, the server 130 and the electronic device 110 can implement signaling interaction through a communication connection between the two.

It should be understood that the structure and function of each element in the environment 100 are described for illustrative purposes only, without implying any limitation on the scope of the present disclosure.

The following will continue to describe some example embodiments of the present disclosure with reference to the accompanying drawings.

### Example Process

FIG. 2 illustrates a flowchart of a process 200 for application creation according to some embodiments of the present disclosure. The process 200 may be implemented at the electronic device 110. The process 200 is described below with reference to FIG. 1.

As illustrated in FIG. 2, at block 210, the electronic device 110, based on a selection of a first application, adds the first application as a target processing entity for application creation.

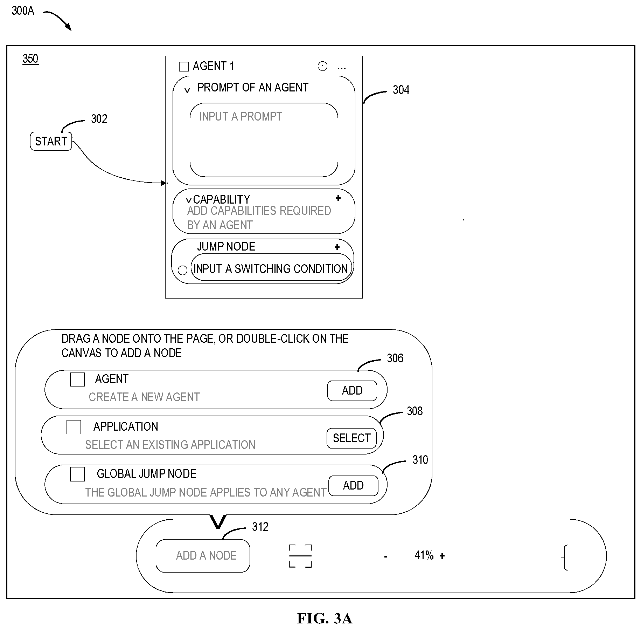

In some embodiments, the electronic device 110 may support users in configuring a plurality of processing entities (e.g., two or more processing entities) comprised in an application and a jump relationship between processing entities to create an application. As will be described in detail below, such processing entities may comprise, for example, an existing application or an agent to be configured. An example process for application creation according to some embodiments of the present disclosure will be described below in conjunction with FIGS. 3A to 3E.

In some embodiments, the electronic device 110 may provide an editing interface 300A as illustrated in FIG. 3A, in which the electronic device 110 may support users in creating a node connection graph 350. Such a node connection graph 350 may comprise a start node 302 and a plurality of nodes corresponding to a plurality of processing entities, e.g., a node 304 corresponding to an "agent 1", etc. Additionally, the electronic device 110 may also support in indicating a jump relationship between corresponding processing entities by adding connections between nodes.

In some embodiments, the electronic device 110 may support users in creating a new application. As an example, the electronic device 110 may create a first initial connection graph based on a request to create a new application. Taking FIG. 3A as an example, the first initial connection graph comprises, for example, a first initial node (e.g., node 304). For a scenario with a newly created application, property information of the first initial node (e.g., node 304) can be empty. Further, the electronic device 110 may create a final node connection graph 350 based on an editing operation of the first initial connection graph.

In some embodiments, the electronic device 110 may support users in converting an existing application based on a single agent to an application based on a plurality of processing entities. Specifically, the electronic device 110 may create a second initial connection graph based on a conversion request for an existing application associated with a single agent. In some embodiments, the second initial connection graph may comprise a second initial node (e.g., node 304 illustrated in FIG. 3A) created based on the existing application.

In some embodiments, unlike the scenario of a newly created application, property information of the agent corresponding to the second initial node (e.g., Agent 1) may, for example, be determined based on the properties of the existing application. That is, at least a part of the property information associated with the existing application may be synchronized to the newly created application.

In some examples, an agent automatically created by converting a single agent-based application may inherit model information from an existing application. For example, in cases where the existing application is implemented based on a particular model, the agent may also be implemented based on that model.

Continuing with reference to FIG. 3A, the electronic device 110 may support users in adding one or more new nodes to the node connection graph 350 through a control 312. As illustrated in FIG. 3A, the electronic device 110 may provide a plurality of controls for adding different types of nodes, e.g., controls 306, 308, and 310.

In some embodiments, the user can add a new node corresponding to the new agent to the node connection graph 350 through the control 306. Similar to the node 304, the user can edit a property of the agent corresponding to the new node and can configure a jump relationship between nodes.

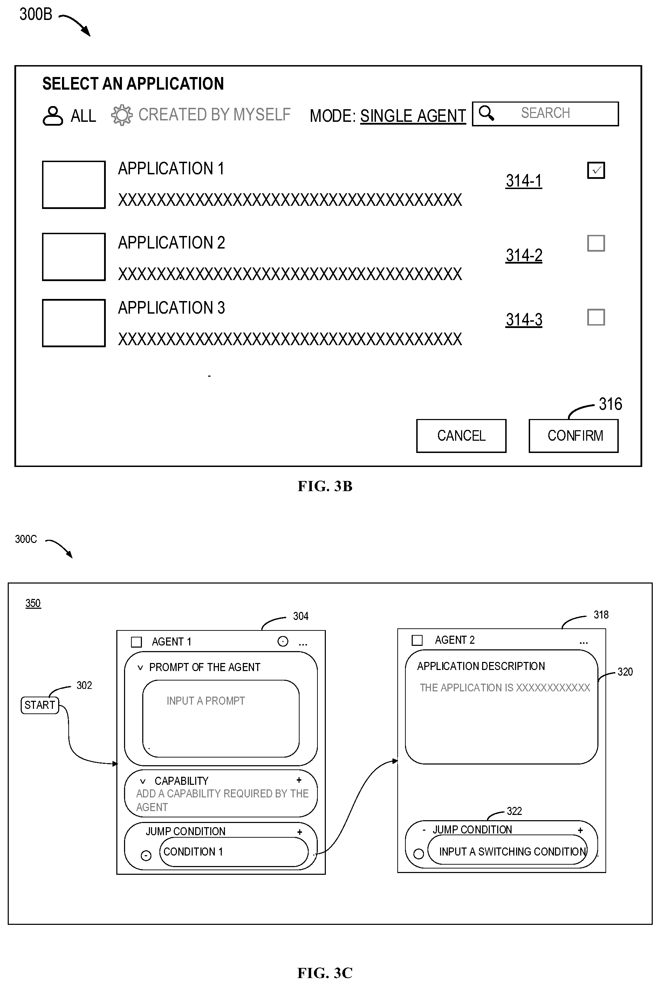

In some embodiments, upon receiving a selection of the control 308, the electronic device 110 may present an interface 300B as illustrated in FIG. 3B. In the interface 300B, the electronic device 110 may provide a set of candidate applications, e.g., a candidate application 314-1, a candidate application 314-2, and a candidate application 314-3 (individually or collectively referred to as a candidate application 314).

In some embodiments, the candidate application 314 allowed to be added may comprise a single agent-based application or an application based on a plurality of processing entities (agents or sub-applications). In some embodiments, the electronic device 110 may also be configured for allowing the addition of only single agent-based applications.

Further, the electronic device 110 may receive a selection by the user for one or more candidate applications in a set of candidate applications 314 and add the one or more candidate applications as one or more processing entities for application creation. For example, the electronic device 110 may add one or more nodes corresponding to the one or more candidate applications to the node connection graph 350.

In some embodiments, the set of candidate applications 314 may comprise an application created by the current user. For example, the user can also view only the application created by the current user by a filter control.

In some embodiments, the set of candidate applications 314 may also comprise an application created by other users by another user for which the current user has a predetermined authority. For example, such applications may comprise one or more applications that allow the current user to reference to create a new application.

In some embodiments, the electronic device 110 may also support, for example, the user in filtering the candidate application 314 by sifting a creator or releaser of the application. Alternatively, the electronic device 110 may also support, for example, the user in searching for a desired application by a search control.

As an example, the electronic device 110 may receive a selection of the application 314 -1 by the user and may respond to a selection of the confirmation control 316 by the user to add the application 314-1 as a target processing entity for application creation.

It should be understood that the electronic device 110 can also receive a selection by the user for a specific application in other suitable ways and add them as target processing entities for application creation. For example, the electronic device 110 can provide an addition entry in a viewing interface of a released application to support users in adding them to the application to be created.

Continuing with reference to FIG. 2, at block 220, the electronic device 110 determines configuration information indicating a plurality of processing entities for application creation and jump information associated with the plurality of processing entities , the jump information indicating at least that a first processing entity of the plurality of processing entities is capable of switching to a second processing entity to process a request, the plurality of processing entities comprising the target processing entity.

In some embodiments, the electronic device 110 may determine the configuration information based on the node connection graph 350 created by the user. Continuing with the example of FIG. 3B, in response to adding the application 314-1 as a target processing entity by the user, as illustrated in FIG. 3C, the electronic device 110 may accordingly add a node 318 corresponding to the application 314 -1 to the node connection graph 350.

In some embodiments, the electronic device 110 may present property information for the application 314-1. For example, the electronic device 110 may display identification information, e.g., an application name, for the application 314-1 in an edit window of the node 318. As another example, the electronic device 110 may display overview information 320 of the application 314-1 to describe information such as capabilities or settings of the application 314-1.

As yet another example, the electronic device 110 may also display release information of the application 314-1, e.g., release date, releaser, etc. In some embodiments, the electronic device 110 may prohibit the user from modifying relevant properties of the application 314-1.

Additionally, the electronic device 110 may also be associated with the node 318 to provide a configuration control 322 to configure a jump condition corresponding to the application 314-1.

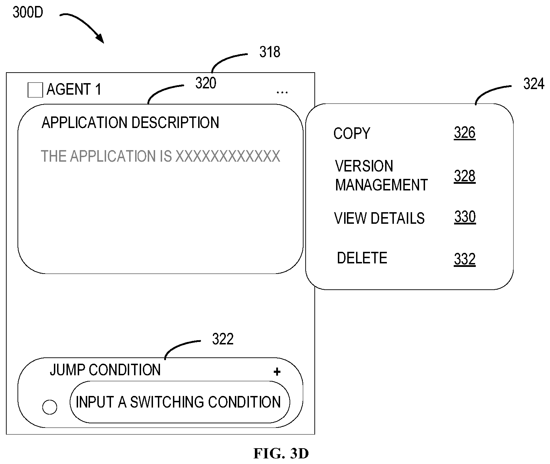

In some embodiments, as illustrated in FIG. 3D, the electronic device 110 may also support users in providing one or more other controls through a window 324. For example, the electronic device 110 may create another node corresponding to the application 314-1 through a control 326; manage a version of the application 314-1 corresponding to the node 318 through a control 328; display more information relating to the application 314-1 through a control 330; and delete the node 318 through a control 332.

In some embodiments, the electronic device 110 may also present update information associated with the target processing entity when an update version of the added application 314-1 exists, wherein the update information indicates at least one update version associated with the application 314-1. For example, the electronic device 110 may be associated with the control 328 to present an indicator regarding the presence of an update version.

Further, the electronic device 110 may provide an update entry for updating to the latest version based on a selection of the control 328 by the user. Alternatively, the electronic device 110 may provide one or more update versions of the application 314-1 for the user to select.

Further, the electronic device 110 may, based on a received update request, associate the target update version of the application 314-1 (e.g., the latest update version, or a specific update version selected by the user) to the target processing entity.

In some embodiments, the update information also indicates whether at least one update version is allowed to be added as a processing entity. For example, update versions of some applications may change a mode of the application, such as switching from a single agent mode to a multi-agent mode. In some cases, if an application to be created only allows references to single agent-based applications, the electronic device 110 may prompt that a new version is based on a multi-agent mode and may indicate that updating to the new version is not allowed.

In some embodiments, the electronic device 110 may also support, for example, in rolling back the application 314-1 to a particular historical version. By way of example, the electronic device 110 may present a plurality of versions associated with the application 314-1 based on a management request for the target processing entity. The plurality of versions may, for example, comprise at least a historical version of the application 314-1.

For example, in response to a selection of the control 328, the electronic device 110 may present all available versions of the application 314-1, e.g., one or more historical versions and/or update versions.

Furthermore, the electronic device 110 may associate a target version of the application 314-1 to a target processing entity based on a selection of the target version among a plurality of versions. For example, when the user selects a historical version of the application 314-1, the electronic device 110 may roll back the application 314-1 to the historical version to create a target application.

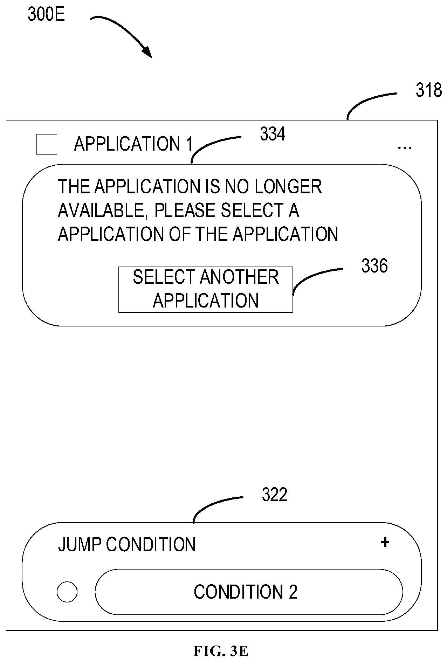

In some cases, the application 314-1 may also change to an unavailable state due to deletion or property changes. Accordingly, as illustrated in FIG. 3E, in response to the application 314 -1 changing to an unavailable state, the electronic device 110 can display prompt information 334 to indicate that a target processing entity corresponding to the application 314-1 has expired.

Additionally, the electronic device 110 may also present a replacement entry 336 for replacing the application 314-1. Accordingly, the electronic device 110 may present an application selection interface as illustrated in FIG. 3B based on a selection for the replacement entry 336. Furthermore, the electronic device 110 may replace the application 314-1 based on a selection by the user of another application and associating the other application with the target processing entity.

In this case, the node 318, for example, may not be deleted, and the electronic device 110 may also support users in configuring the jump condition of the target processing entity through the configuration control 322.

The following will further introduce an example process for configuring a jump condition. The electronic device 110, for example, can support users to configure a jump condition between any two nodes. Such two nodes may comprise a node corresponding to an agent or a node corresponding to a referenced application.

As an example, as illustrated in FIG. 3C, the electronic device 110 can also support user in configuring connection relationships between nodes in the node connection graph 350, e.g., a connection between the node 304 and the node 318.

Specifically, as illustrated in FIG. 3C, the electronic device 110 may establish a connection between the node 304 and the node 318 based on a user configured jump condition (e.g., condition 1) associated with the node 304.

As an example, the connection may indicate a jump relationship between a processing entity corresponding to a "agent 1" and a processing entity corresponding to a "reference 1" to indicate that the "agent 1" may switch to a "application 1" to process a request or perform a task if a "condition 1" is satisfied.

In some embodiments, the electronic device 110 may support users in inputting a text content through a configuration control of the node 304 to define any appropriate jump conditions. As an example, the content of the "condition 1" may be, for example, "When the user asks about the weather." Accordingly, the "agent 1" may switch to the "application 1" to respond to the query when it is determined that the content of the user query is weather-related.

In some embodiments, in order to support the jump from the "agent 1" to the "application 1", a jump plug-in corresponding to the jump condition (e.g., the condition 1) from the "agent 1" to the "application 1" can be created. This enables the "agent 1" to independently determine whether the jump plug-in is needed in the current scenario to perform the switch from the "agent 1" to the "application 1". In some examples, in the case where the "agent 1" creates a jump condition, a recommendation interaction for the "agent 1" can also be generated based on the jump condition.

In some embodiments, for example, the electronic device 110 may also support users in only adding connections between nodes without configuring corresponding jump conditions. For example, after the user configures a jump relationship from the "agent 1" to the "application 1", the "agent 1" may determine whether to switch to the "application 1" based on description information of the "application 1".

As an example, such description information may indicate a capability of the "application 1". For example, the description information of the "application 1" may indicate that the "application 1" is suitable for tasks such as weather inquiries. Accordingly, when the "agent 1" receives an inquiry about weather, it can determine that the "application 1" is suitable for processing the inquiry and switch to the "application 1".

Considering that as the number of nodes increases, in some scenarios, users may expect to configure a global jump condition. As illustrated in FIG. 3A, the electronic device 110 can also support users in configuring global jump information through a control 310. The global jump information can indicate that at least one other processing entity in the node connection graph other than a target processing entity is capable of switching to that target processing entity to process a request under a uniformly specific condition. In some embodiments, the global jump information can indicate that all processing entities in the node connection graph other than the specific processing entity to be jumped to, can switch to the specific processing entity to process requests under a uniformly specific condition. It should be understood that such specific processing entity can correspond to an agent or a referenced application.

In some embodiments, when a respective jump relationship is configured, during processing a target request by the target application, in response to the target application switching from the first processing entity to the second processing entity to process the target request, context information associated with the first processing entity is provided to the second processing entity for processing the target request.

Taking the jump from the "agent 1" to the "application 1" as an example, historical conversation information between the user and the "agent 1" can be provided to the "application 1" as context information to improve the efficiency of the "application 1" in processing a task.

It should be appreciated that, while the above describes the process of configuring a jump condition using a jump from the agent to the application as an example, such a configuration process is equally applicable to a jump from the agent to the agent, an adjustment from an application to an application, or a jump from an application to the agent.

In some embodiments, the electronic device 110 may receive a set of editing operations via the editing interface illustrated in FIGS. 3A to 3E to create a final node connection graph 350.

In some examples, the editing operations may comprise adding a new node to the node connection graph 350, e.g., a node corresponding to a processing entity or a node corresponding to an existing reference.

As another example, the editing operations may comprise deleting an existing node in the node connection graph 350. As another example, the editing operations may comprise editing a property of a node in the node connection graph 350, e.g., a prompt corresponding to the agent, capability information, model information, knowledge information, etc. As another example, the editing operations may comprise modifying a connection relationship of nodes in the node connection graph 350, e.g. adding a new jump relationship between nodes, deleting an existing jump relationship, etc.

In some embodiments, the electronic device 110 may also support users in configuring global property information relating to the application to be created, which may act on all processing entities associated with the application, e.g., an agent or a referenced application. As an example, such global property information may comprise global prompt to, for example, describe capability information or setting information of the target application.

In some embodiments, the prompt information of the target processing entity corresponding to the application 314-1 is determined based on a private prompt of the target processing entity (e.g., a private prompt of the application 314-1) and a global prompt associated with the target application.

For example, the electronic device 110 may splice the private prompt of the application 314 -1 and the global prompt configured by the user for the target application, thereby determining a final prompt to be used when the target processing entity actually processes the task. Additionally, the electronic device 110 may delete redundant information when splicing the global prompt and the private prompt.

In some embodiments, the global property information of the target application may also comprise variable information associated with an application to be created. For example, the user can define a global environment variable, a user variable, etc., which can be used by various processing entities (e.g., agents or referenced applications) associated with the target application.

In some embodiments, the application 314-1 may be associated with a set of private variables, for example, and accordingly, global property information may indicate a set of global variables. Further, in the case where the application 314-1 is added, the electronic device 110 may also update a variable database based on a match between the set of private variables and the set of global variables. In some embodiments, the variable database may be accessible by all processing entities (e.g., agents or referenced applications) in the target application.

In one example, in response to a first identifier of a first variable in the set of private variables being corresponding to a second identifier of a second variable in the set of global variables, the electronic device 110 may associate the first variable with the second variable without adding the first variable to the variable database. For example, when the name of the private variable is the same as that of the global variable, the electronic device 110 may no longer add the private variable to the variable database, but associate the private variable to the global variable, such that the application 314-1 can use the variable normally.

In another example, in response to a third identifier of a third variable in the set of private variables failing to be corresponding to the set of global variables, the electronic device 110 may add the third variable to a variable database of the target application. For example, when an identifier of the private variable is not comprised in the variable database, the electronic device 110 may add the private variable to the variable database.

In some embodiments, if the node 318 corresponding to the application 314-1 is deleted from the node connection graph 350, the electronic device 110 may also update the variable database accordingly. Specifically, the electronic device 110 may, for example, delete a private variable (e.g., a third variable) used only for the application 314-1 from the variable database.

Continuing with reference to FIG. 2, at block 230, the electronic device 110 creates a target application based on the configuration information.

As an example, electronic device 110 may create a corresponding target application, e.g., a bot, based on the configuration information. Further, the bot may, for example, be released or shared to other users.

In some embodiments, with the permission of the releaser, other users may also be supported, for example, in creating templates for the released application, and new applications may be created by editing the corresponding node connection graphs, thereby improving the efficiency of the application.

Based on the process described above, embodiments of the present disclosure are capable of supporting users in creating applications based on multiple processing entities (e.g., a bot based on multiple processing entities), and can support processing of complex requests by switching processing entities to process a task.

In addition, embodiments of the present disclosure can support a user in creating a new application by referencing an existing application (e.g., a released bot), which can further improve the efficiency of application creation.

### Example Devices and Equipment

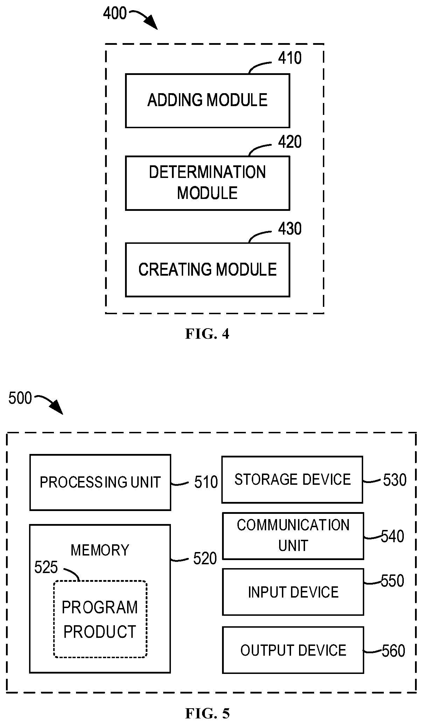

Embodiments of the present disclosure also provide respective apparatus for implementing the methods or processes described above. FIG. 4 illustrates a schematic structural block diagram of an example apparatus 400 for application creation according to some embodiments of the present disclosure. The apparatus 400 may be implemented as, or comprised in, the electronic device 110. Individual modules/components in the apparatus 400 may be implemented by hardware, software, firmware, or any combination thereof.

As illustrated in FIG. 4, the apparatus 400 comprises an obtaining module 410 configured for obtaining configuration information indicating, for creating a plurality of agents in an application and jump information associated with the plurality of agents, the jump information indicating at least that a first agent amongst the plurality of agents is capable of switching to a second agent to process a request; and a creating module 420 configured for creating a target application based on the configuration information.

In some embodiments, a determination module 420 is configured for: determining a node connection graph, the node connection graph comprising a plurality of nodes corresponding to the plurality of processing entities, a node connection in the node connection graph indicating a jump relationship between nodes; and determining the configuration information based on the node connection graph.

In some embodiments, the adding module 410 is configured for: adding to the node connection graph a first node corresponding to the first application.

In some embodiments, the apparatus 400 further comprises a property presentation module configured for: presenting attribute information of the first application, the attribute information comprising at least one of: identification information, overview information, and release information.

In some embodiments, the determination module 420 is specifically configured for: receiving, via an editing interface, a set of editing operations to create the node connection graph, wherein the set of editing operations comprises at least one of: adding a new node to the node connection graph; deleting an existing node in the node connection graph; editing an attribute of a node in the node connection graph; or modifying a connection relationship of nodes in the node connection graph.

In some embodiments, the adding module 410 is configured for: presenting a set of candidate applications based on a received adding request; and based on the selection of the first application in the set of candidate applications, adding the first application as the target processing entity for application creation.

In some embodiments, the set of candidate applications comprises at least one of: an application created by a current user; or an application released by another user for which the current user has a predetermined authority.

In some embodiments, the apparatus 400 further comprises a condition configuration module configured for: receiving a first configuration operation associated with the first processing entity, the first configuration operation indicating a first condition for switching from the first processing entity to the second processing entity.

In some embodiments, the first configuration operation comprises inputting a textual content for indicating a first condition.

In some embodiments, the apparatus 400 further comprises a plug-in creating module configured for: creating a jump plug-in corresponding to the first condition, enabling the first processing entity to switch to the second processing entity by invoking the jump plug-in.

In some embodiments, whether the first processing entity switches to the second processing entity is determined based on description information of the second processing entity.

In some embodiments, during processing a target request by the target application, in response to the target application switching from the first processing entity to the second processing entity to process the target request, context information associated with the first processing entity is provided to the second processing entity for processing the target request.

In some embodiments, the apparatus 400 further comprises a first update module configured for: presenting update information associated with the target processing entity, the update information indicating at least one updated version associated with the first application; and associating, based on a received update request, a target updated version of the first application with the target processing entity.

In some embodiments, the update information further indicates whether the at least one update version is allowed to be added as a processing entity.

In some embodiments, the apparatus 400 further comprises a switching module configured for: presenting a plurality of versions associated with the first application based on a management request for the target processing entity, the plurality of versions comprising at least a historical version of the first application; and based on a selection of a target version among the plurality of versions, associating the target version of the first application with the target processing entity.

In some embodiments, the apparatus 400 further comprises a prompt module configured for: in response to the first application changing to an unavailable state, presenting prompt information associated with the target processing entity, the prompt information indicating that the target processing entity is invalid.

In some embodiments, the apparatus 400 further comprises a replacement module configured for: presenting a replacement entry for replacing the first application; and associating, based on a selection of the replacement entry, a second application with the target processing entity.

In some embodiments, prompt information of the target processing entity is determined based on a private prompt of the target processing entity and a global prompt associated with the target application.

In some embodiments, the target application is associated with a set of global variables and the target processing entity is associated with a set of private variables, the apparatus 400 further comprises a variable management module configured for:

in response to a first identifier of a first variable in the set of private variables being corresponding to a second identifier of a second variable in the set of global variables, associating the first variable with the second variable; or in response to a third identifier of a third variable in the set of private variables failing to be corresponding to the set of global variables, adding the third variable to a variable database of the target application.

In some embodiments, the variable management module is further configured for: in response to a deletion of the target processing entity, deleting the third variable from the variable database.

In some embodiments, the plurality of processing entities further comprises a processing entity corresponding to a target agent.

In some embodiments, the first application is an application based on a single agent.

FIG. 5 illustrates a block diagram of an electronic device 500 in which one or more embodiments of the present disclosure may be implemented. It would be appreciated that the electronic device 500 illustrated in FIG. 5 is only an example and should not constitute any restriction on the function and scope of the embodiments described herein. The electronic device 500 illustrated in FIG. 5 may be used to implement the electronic device 110 of FIG. 1.

As illustrated in FIG. 5, the electronic device 500 is in the form of a general electronic device. The components of the electronic device 500 may comprise, but are not limited to, one or more processors or processing units 510, a memory 520, a storage device 530, one or more communication units 540, one or more input devices 550, and one or more output devices 560. The processing units 510 may be an actual or virtual processors and can execute various processes according to the programs stored in the memory 520. In a multiprocessor system, a plurality of processing units execute computer executable instructions in parallel to improve the parallel processing capability of the electronic device 500.

The electronic device 500 typically comprises a variety of computer storage media. Such media can be any available media that is accessible to the electronic device 500, comprising but not limited to volatile and non-volatile media, removable and non-removable media. The memory 520 can be volatile memory (such as registers, caches, random access memory (RAM)), nonvolatile memory (such as a read-only memory (ROM), an electrically erasable programmable read-only memory (EEPROM), a flash memory), or some combination thereof. The storage device 530 can be any removable or non-removable medium, and can comprise machine-readable medium, such as a flash drive, a disk, or any other medium which can be used to store information and/or data and can be accessed within the electronic device 500.

The electronic device 500 may further comprise additional removable/non-removable, volatile/non-volatile storage medium. Although not illustrated in FIG. 5, a disk driver for reading from or writing to a removable, non-volatile disk (such as a "floppy disk"), and an optical disk driver for reading from or writing to a removable, non-volatile optical disk can be provided. In these cases, each driver may be connected to the bus (not illustrated) by one or more data medium interfaces. The memory 520 can comprise a computer program product 525, which comprises one or more program modules configured for execute various methods or actions of the various embodiments disclosed herein.

The communication unit 540 implements communication with other electronic devices via a communication medium. In addition, functions of components in the electronic device 500 may be implemented by a single computing cluster or a plurality of computing machines, which can communicate through a communication connection. Therefore, the electronic device 500 may be operated in a networking environment using a logical connection with one or more other servers, a network personal computer (PC), or another network node.

The input device 550 may be one or more input devices, such as a mouse, a keyboard, a trackball, etc. The output device 560 may be one or more output devices, such as a display, a speaker, a printer, etc. The electronic device 500 may also communicate with one or more external devices (not illustrated) through the communication unit 540 as required. The external device, such as a storage device, a display device, etc., communicate with one or more devices that enable users to interact with the electronic device 500, or communicate with any device (for example, a network card, a modem, etc.) that makes the electronic device 500 communicate with one or more other computing devices. Such communication may be executed via an input/output (I/O) interface (not illustrated).

According to example implementation of the present disclosure, there is provided a computer-readable storage medium on which a computer-executable instruction or computer program is stored, wherein the computer-executable instructions are executed by a processor to implement the methods described above.

Various aspects of the present disclosure are described herein with reference to the flow chart and/or the block diagram of the method, the device, the apparatus, and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, special computers, or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions comprises a product, which comprises instructions to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment, or instructions, which comprises one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is example, not exhaustive, and is not limited to the disclosed implementations. Without departing from the scope and spirit of the described implementations, many modifications and changes are obvious to ordinary skill in the art. The selection of terms used herein aims to best explain the principles, practical application, or improvement of technology in the market of each implementation, or to enable other ordinary skill in the art to understand the various embodiments disclosed herein.

## Claims

1. A method for application creation, comprising:
based on a selection of a first application, adding the first application as a target processing entity for application creation;
determining configuration information indicating a plurality of processing entities for application creation and jump information associated with the plurality of processing entities , the jump information indicating at least that a first processing entity of the plurality of processing entities is capable of switching to a second processing entity to process a request, the plurality of processing entities comprising the target processing entity; and
creating a target application based on the configuration information.

2. The method of claim 1, wherein determining configuration information comprises:
determining a node connection graph, the node connection graph comprising a plurality of nodes corresponding to the plurality of processing entities, a node connection in the node connection graph indicating a jump relationship between nodes; and
determining the configuration information based on the node connection graph.

3. The method of claim 2, wherein adding the first application as a target processing entity for application creation comprises:
adding to the node connection graph a first node corresponding to the first application.

4. The method of claim 2, further comprising:
presenting attribute information of the first application, the attribute information comprising at least one of: identification information, overview information, and release information.

5. The method of claim 2, wherein determining a node connection graph comprises receiving, via an editing interface, a set of editing operations to create the node connection graph,
wherein the set of editing operations comprises at least one of:
adding a new node to the node connection graph;
deleting an existing node in the node connection graph;
editing an attribute of a node in the node connection graph; or
modifying a connection relationship of nodes in the node connection graph.

6. The method of claim 1, wherein adding the first application as a target processing entity for application creation comprises:
presenting a set of candidate applications based on a received adding request; and
based on the selection of the first application in the set of candidate applications, adding the first application as the target processing entity for application creation.

7. The method of claim 6, wherein the set of candidate applications comprises at least one of:
an application created by a current user; or
an application released by another user for which the current user has a predetermined authority.

8. The method of claim 1, further comprising:
receiving a first configuration operation associated with the first processing entity, the first configuration operation indicating a first condition for switching from the first processing entity to the second processing entity.

9. The method of claim 8, wherein the first configuration operation comprises inputting a textual content for indicating a first condition.

10. The method of claim 9, further comprising:
creating a jump plug-in corresponding to the first condition, enabling the first processing entity to switch to the second processing entity by invoking the jump plug-in.

11. The method of claim 1, wherein whether the first processing entity switches to the second processing entity is determined based on description information of the second processing entity.

12. The method according to claim 1, wherein:
during processing a target request by the target application, in response to the target application switching from the first processing entity to the second processing entity to process the target request, context information associated with the first processing entity is provided to the second processing entity for processing the target request.

13. The method of claim 1, further comprising:
presenting update information associated with the target processing entity, the update information indicating at least one updated version associated with the first application; and
associating, based on a received update request, a target updated version of the first application with the target processing entity.

14. The method of claim 13, wherein the update information further indicates whether the at least one update version is allowed to be added as a processing entity.

15. The method of claim 1, further comprising:
presenting a plurality of versions associated with the first application based on a management request for the target processing entity, the plurality of versions comprising at least a historical version of the first application; and
based on a selection of a target version among the plurality of versions, associating the target version of the first application with the target processing entity.

16. The method of claim 1, further comprising:
in response to the first application changing to an unavailable state, presenting prompt information associated with the target processing entity, the prompt information indicating that the target processing entity is invalid.

17. The method of claim 16, further comprising:
presenting a replacement entry for replacing the first application; and
associating, based on a selection of the replacement entry, a second application with the target processing entity.

18. The method of claim 1, wherein prompt information of the target processing entity is determined based on a private prompt of the target processing entity and a global prompt associated with the target application.

19. The method of claim 1, wherein the target application is associated with a set of global variables and the target processing entity is associated with a set of private variables, the method further comprising:
in response to a first identifier of a first variable in the set of private variables being corresponding to a second identifier of a second variable in the set of global variables, associating the first variable with the second variable; or
in response to a third identifier of a third variable in the set of private variables failing to be corresponding to the set of global variables, adding the third variable to a variable database of the target application.

20. The method of claim 19, further comprising:
in response to a deletion of the target processing entity, deleting the third variable from the variable database.

21. The method of claim 1, wherein the plurality of processing entities further comprises a processing entity corresponding to a target agent.

22. The method of claim 1, wherein the first application is an application based on a single agent.

23. An apparatus for application creation, comprising:
an adding module configured for adding, based on a selection of a first application, the first application as a target processing entity for application creation;
a determination module configured for determining configuration information indicating a plurality of processing entities and jump information associated with the plurality of processing entities for application creation, the jump information indicating at least that a first processing entity of the plurality of processing entities is capable of switching to a second processing entity to process a request, the plurality of processing entities comprising the target processing entity; and
a creating module configured for creating a target application based on the configuration information.

24. An electronic device comprising:
at least one processing unit; and
at least one memory being coupled to the at least one processing unit and storing instructions for execution by the at least one processing unit, the instructions, when executed by the at least one processing unit, cause the electronic device to perform the method of any of claims 1 to 22.

25. A computer-readable storage medium having a computer program stored thereon, the computer program being executable by a processor to implement the method of any of claims 1 to 22.
